# EUROPEAN PATENT APPLICATION

(11) **EP 4 435 688 A1**
(43) Date of publication of application: **25.09.2024**
(21) Application number: 23191877.2
(22) Date of filing: 17.08.2023
(51) Int. Cl.: G06Q 10/06

(54) **INFORMATION PROCESSING APPARATUS, INFORMATION PROCESSING PROGRAM, AND INFORMATION PROCESSING METHOD**

(30) Priority: 20.03.2023 JP 2023044635
(71) Applicant: FUJIFILM Business Innovation Corp., Minato-ku Tokyo (JP)
(72) Inventor: KOBAYASHI, Kazuhide, Yokohama-shi, Kanagawa (JP)
(74) Representative: Kurig, Thomas

(57) **Abstract**

An information processing apparatus includes a processor configured to, based on state information indicating a state of electronic content, operation information indicating an operation performed in the past with respect to the electronic content of the state, and a state of target content that is electronic content operated by a user, specify a recommended operation that is an operation to be subsequently performed by the user with respect to the target content, based on a work database in which information related to a work including plural operations performed in the past with respect to electronic content is stored and in which an attribute of the electronic content, details of the plural operations performed in the past with respect to the electronic content, and an attribute of related content that is electronic content related to the electronic content with respect to at least one operation of the plural operations are associated with each other, an attribute of the target content, and an operation detail performed by the user so far with respect to the target content, specify a similar work similar to a work with respect to the target content from the work stored in the work database, specify an attribute of the related content that is an attribute of the related content included in the similar work with respect to an operation corresponding to the recommended operation performed in the similar work, specify target-related content that is electronic content related to the recommended operation with respect to the target content, from electronic content having the specified attribute based on the target content, and notify the user of the target-related content.

## Description

### BACKGROUND OF THE INVENTION

### (i) Field of the Invention

The present invention relates to an information processing apparatus, an information processing program, and an information processing method.

### (ii) Description of Related Art

JP2018-81414A discloses an information processing apparatus that extracts information related to an electronic document for generating a workflow including processing of the electronic document. JP2022-42882A discloses an information processing apparatus that selects a recommended item (for example, a product related to sales) in accordance with a progress obtained from an activity record (for example, a sales record). JP2015-162170A discloses an information processing apparatus that, in a case where a worker operates a plurality of files, recommends a file which is required for the operation or which is a reference for the operation to the worker.

### SUMMARY OF THE INVENTION

In a case where a user operates target content that is electronic content, notifying the user of a recommended operation that is an operation detail to be subsequently performed by the user is considered. Here, related content that is electronic content related to the recommended operation may be present. For example, in checking an amount of money on a billing document, the user may check while viewing an estimate document related to the billing document. In a case where the target content is the billing document and where the recommended operation is checking the amount of money, the estimate document related to the billing document is the related content related to the recommended operation.

An object of the present invention is to enable a user to easily perceive target-related content related to a recommended operation that is an operation detail to be subsequently performed by the user with respect to target content operated by the user.

According to a first aspect of the present disclosure, there is provided an information processing apparatus including a processor configured to, based on state information indicating a state of electronic content, operation information indicating an operation performed in the past with respect to the electronic content of the state, and a state of target content that is electronic content operated by a user, specify a recommended operation that is an operation to be subsequently performed by the user with respect to the target content, based on a work database in which information related to a work including a plurality of operations performed in the past with respect to electronic content is stored and in which an attribute of the electronic content, details of the plurality of operations performed in the past with respect to the electronic content, and an attribute of related content that is electronic content related to the electronic content with respect to at least one operation of the plurality of operations are associated with each other, an attribute of the target content, and an operation detail performed by the user so far with respect to the target content, specify a similar work similar to a work with respect to the target content from the work stored in the work database, specify an attribute of the related content that is an attribute of the related content included in the similar work with respect to an operation corresponding to the recommended operation performed in the similar work, specify target-related content that is electronic content related to the recommended operation with respect to the target content, from electronic content having the specified attribute based on the target content, and notify the user of the target-related content.

According to a second aspect of the present disclosure, there is provided the information processing apparatus according to the first aspect, in which the processor may be configured to specify, as the target-related content, electronic content that is electronic content having the specified attribute and that is stored in the identical work region to the target content.

According to a third aspect of the present disclosure, there is provided the information processing apparatus according to the second aspect, in which the processor may be configured to specify the target-related content based on detail information that is extracted by analyzing the target content and that indicates a detail of the target content and detail information that is extracted by analyzing the electronic content having the specified attribute and that indicates a detail of the electronic content.

According to a fourth aspect of the present disclosure, there is provided the information processing apparatus according to any one of the first to third aspects, in which the processor may be configured to specify a plurality of recommended operations, specify a plurality of pieces of target-related content related to the plurality of recommended operations, respectively, and display the plurality of pieces of target-related content on a display unit in an aspect of showing the related recommended operations.

According to a fifth aspect of the present disclosure, there is provided the information processing apparatus according to any one of the first to fourth aspects, in which the processor may be configured to open the target content and the target-related content in accordance with an operation of selecting the recommended operation by the user.

According to a sixth aspect of the present disclosure, there is provided the information processing apparatus according to any one of the first to fifth aspects, in which the processor may be configured to, in a case where the user does not have access permission for the target-related content, notify the user that the target-related content is specified and that the user does not have the access permission for the target-related content.

According to a seventh aspect of the present disclosure, there is provided an information processing program causing a computer to, based on state information indicating a state of electronic content, operation information indicating an operation performed in the past with respect to the electronic content of the state, and a state of target content that is electronic content operated by a user, specify a recommended operation that is an operation to be subsequently performed by the user with respect to the target content, based on a work database in which information related to a work including a plurality of operations performed in the past with respect to electronic content is stored and in which an attribute of the electronic content, details of the plurality of operations performed in the past with respect to the electronic content, and an attribute of related content that is electronic content related to the electronic content with respect to at least one operation of the plurality of operations are associated with each other, an attribute of the target content, and an operation detail performed by the user so far with respect to the target content, specify a similar work similar to a work with respect to the target content from the work stored in the work database, specify an attribute of the related content that is an attribute of the related content included in the similar work with respect to an operation corresponding to the recommended operation performed in the similar work, and specify target-related content that is electronic content related to the recommended operation with respect to the target content, from electronic content having the specified attribute based on the target content.

According to an eighth aspect of the present disclosure, there is provided an information processing method including specifying, based on state information indicating a state of electronic content, operation information indicating an operation performed in the past with respect to the electronic content of the state, and a state of target content that is electronic content operated by a user, a recommended operation that is an operation to be subsequently performed by the user with respect to the target content, specifying, based on a work database in which information related to a work including a plurality of operations performed in the past with respect to electronic content is stored and in which an attribute of the electronic content, details of the plurality of operations performed in the past with respect to the electronic content, and an attribute of related content that is electronic content related to the electronic content with respect to at least one operation of the plurality of operations are associated with each other, an attribute of the target content, and an operation detail performed by the user so far with respect to the target content, a similar work similar to a work with respect to the target content from the work stored in the work database, specifying an attribute of the related content that is an attribute of the related content included in the similar work with respect to an operation corresponding to the recommended operation performed in the similar work, and specifying target-related content that is electronic content related to the recommended operation with respect to the target content, from electronic content having the specified attribute based on the target content.

According to the first aspect, the seventh aspect, or the eighth aspect of the present disclosure, the user can easily perceive the target-related content related to the recommended operation that is an operation detail to be subsequently performed by the user with respect to the target content operated by the user.

According to the second aspect of the present disclosure, the electronic content in the identical work region to the target content can be the target-related content.

According to the third aspect of the present disclosure, the related content corresponding to the detail of the target content can be specified.

According to the fourth aspect of the present disclosure, the user can perceive the target-related content related to each of the plurality of recommended operations.

According to the fifth aspect of the present disclosure, the user can open the target content and the target-related content by performing the operation of selecting the recommended operation.

According to the sixth aspect of the present disclosure, the user can perceive that the target-related content for which the user does not have the access permission is specified.

### BRIEF DESCRIPTION OF THE DRAWINGS

Exemplary embodiment(s) of the present invention will be described in detail based on the following figures, wherein:
Fig. 1 is a schematic configuration diagram of an information processing system according to the present exemplary embodiment;
Fig. 2 is a schematic configuration diagram of a user terminal;
Fig. 3 is a schematic configuration diagram of a server;
Fig. 4 is a conceptual diagram illustrating an example of a detail of a document DB;
Fig. 5 is a conceptual diagram illustrating an example of a detail of an operation history DB;
Fig. 6 is a conceptual diagram illustrating an example of a detail of a work DB;
Fig. 7 is a diagram illustrating an example of a screen for providing a notification of a recommended operation;
Fig. 8 is a diagram illustrating a first example of a screen for providing a notification of target-related content;
Fig. 9 is a diagram illustrating a second example of the screen for providing the notification of the target-related content;
Fig. 10 is a diagram illustrating an example of a screen for providing a notification of a plurality of pieces of target-related content;
Fig. 11 is a diagram illustrating a screen on which a target electronic document and a related electronic document are open;
Fig. 12 is a diagram illustrating an example of a screen for providing a notification of target-related content for which a user does not have operation permission; and
Fig. 13 is a flowchart illustrating a flow of processing of the server according to the present exemplary embodiment.

### DETAILED DESCRIPTION OF THE INVENTION

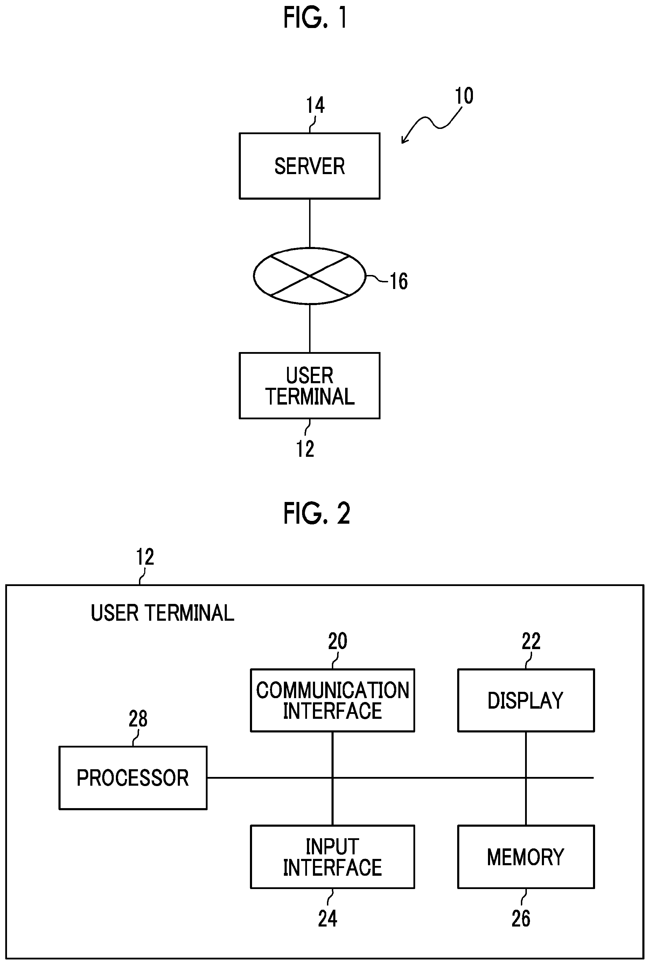

Fig. 1 is a schematic configuration diagram of an information processing system 10 according to the present exemplary embodiment. The information processing system 10 is configured to include a user terminal 12 used by a user, and a server 14 as an information processing apparatus. While only one user terminal 12 is illustrated in Fig. 1, the information processing system 10 may include a plurality of user terminals 12 used by a plurality of users. The user terminal 12 and the server 14 are communicably connected to each other via a communication line 16 such as a local area network (LAN) or a wide area network (WAN).

Fig. 2 is a schematic configuration diagram of the user terminal 12. While the user terminal 12 is, for example, a computer such as a personal computer, a tablet terminal, or a smartphone, the user terminal 12 is not limited thereto and may be any apparatus as long as the user terminal 12 has functions described below.

A communication interface 20 is configured with, for example, a network card. The communication interface 20 has a function of communicating with another apparatus such as the server 14.

A display 22 is configured with, for example, a liquid crystal display or an organic electro luminescence (EL) display. Various screens are displayed on the display 22.

An input interface 24 is configured with, for example, a keyboard, a mouse, or a touch panel. The input interface 24 is used for inputting an instruction of the user into the user terminal 12.

A memory 26 is configured to include, for example, a hard disk drive (HDD), a solid state drive (SSD), an embedded multi media card (eMMC), a read only memory (ROM), or a random access memory (RAM). A program for operating each part of the user terminal 12 and various pieces of information required for processing performed by a processor 28, described later, are stored in the memory 26.

The processor 28 is configured with, for example, a central processing unit (CPU). The processor 28 controls each part of the user terminal 12 based on the program stored in the memory 26.

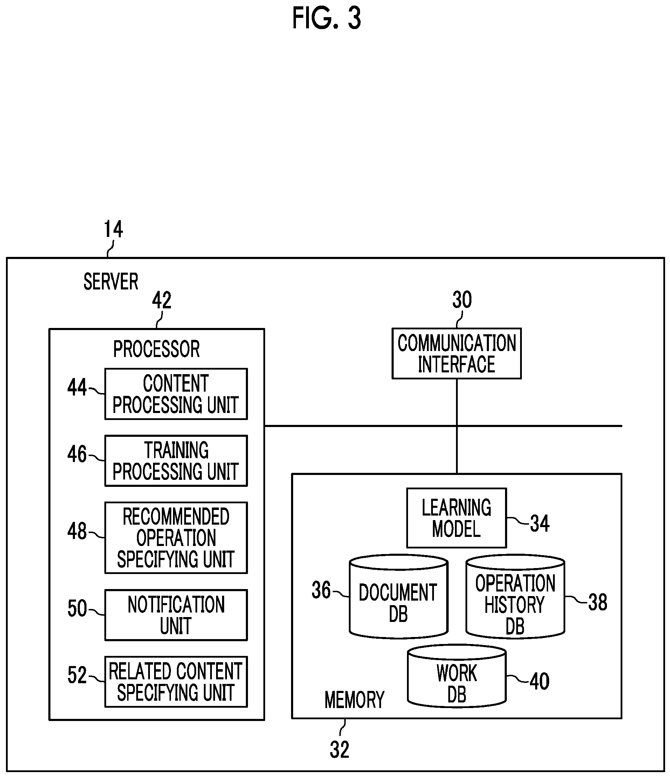

Fig. 3 is a schematic configuration diagram of the server 14. In the present exemplary embodiment, the server 14 is an apparatus that provides an electronic content management service for managing electronic content to the user. While an example in which the electronic content managed by the electronic content management service is an electronic document (that is, an example in which the server 14 provides an electronic document management service to the user) will be described in the present exemplary embodiment, the electronic content managed by the electronic content management service is not limited to the electronic document. The electronic content managed by the electronic content management service may be, for example, image data, music data, or program data. The electronic document management service stores the electronic document received from the user, provides the electronic document to the user in response to a request from the user, and furthermore, executes processing with respect to the electronic document in accordance with an operation of the user.

A communication interface 30 is configured with, for example, a network card. The communication interface 30 has a function of communicating with another apparatus such as the user terminal 12.

A memory 32 is configured to include, for example, an HDD, an SSD, an eMMC, a ROM, or a RAM. An information processing program for operating each part of the server 14 is stored in the memory 32. The information processing program can be stored in, for example, a computer readable non-transitory storage medium such as a universal serial bus (USB) memory or an SD card. The server 14 can read and execute the information processing program from the storage medium. In addition, as illustrated in Fig. 3, a learning model 34, a document database (DB) 36, an operation history DB 38, and a work DB 40 are stored in the memory 32.

While the learning model 34 may be, for example, a learning model using logistic regression or XGBoost, the learning model 34 may have another structure (for example, a neural network) as long as the learning model 34 has functions described below. The learning model 34 is a model that, in a case where the learning model 34 is sufficiently trained, takes state information indicating a state (will be specifically described later) of the electronic document as input data and that outputs an operation (will be specifically described later) to be performed by the user with respect to the electronic document. A method of training the learning model 34 and a method of using the trained learning model 34 will be described later.

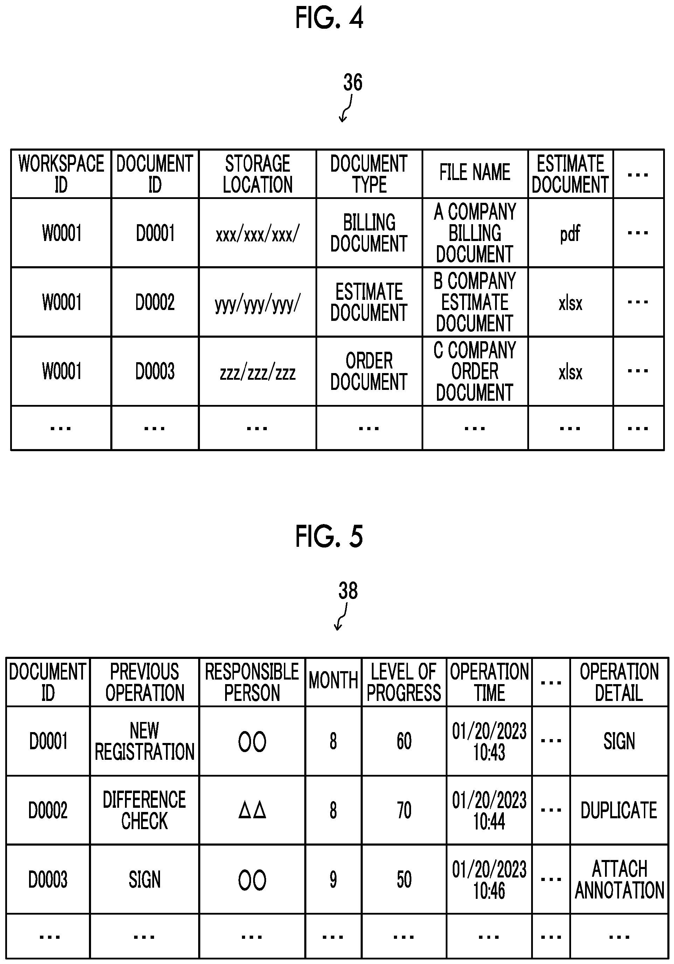

Fig. 4 is a conceptual diagram illustrating an example of a detail of the document DB 36. Attributes of the electronic document managed by the electronic document management service are stored in the document DB 36. In the present exemplary embodiment, a document ID for uniquely identifying the electronic document and the attributes of the electronic document are stored in association with each other in the document DB 36. In the example in Fig. 4, values of items "storage location" to "extension" represent the attributes of the electronic document.

In addition, as illustrated in Fig. 4, in the document DB 36, each document ID may be associated with a workspace ID for identifying a workspace as a work region that is a memory region in which the electronic document is stored. In the electronic document management service according to the present exemplary embodiment, a plurality of workspaces are defined. For example, the workspace can be defined for each user or for each user group. A workspace of a user is accessible by only the user.

Each time a new electronic document is registered in the electronic document management service, the attributes of the electronic document and the workspace ID of the workspace in which the electronic document is stored are stored in association with the document ID of the electronic document in the document DB 36.

Fig. 5 is a conceptual diagram illustrating an example of a detail of the operation history DB 38. Information related to an operation performed in the past with respect to the electronic document in the electronic document management service is stored in the operation history DB 38. The "operation" in the present specification means a work performed by the user with respect to the electronic content (in the present exemplary embodiment, the electronic document). In the present exemplary embodiment, in a case where the user performs the operation with respect to the electronic document, the electronic document management service performs processing corresponding to the operation. Accordingly, information related to processing performed by the electronic document management service (in other words, a processor 42 described later) in accordance with the operation of the user performed in the past with respect to the electronic document in the electronic document management service can be said to be stored in the operation history DB 38.

In the present exemplary embodiment, the state information indicating the state of the electronic document and operation information indicating the operation performed in the past with respect to the electronic document of the state are stored in association with each other in the operation history DB 38. The "state" of the electronic document is a concept including the attributes of the electronic document and an operation performed so far (before the operation indicated by the operation information is performed) with respect to the electronic document. The "attributes" of the electronic document include information included in the electronic document as meta-information of the electronic document, and information related to the electronic document included in the electronic document management service.

In the example in Fig. 5, the state information and the operation information are associated with the document ID for uniquely identifying the electronic document in the operation history DB 38. In the example in Fig. 5, items "previous operation" to "operation time" are the state information, and an item "operation detail" is the operation information. Accordingly, the state information includes a plurality of state items in the present exemplary embodiment.

Among the state items illustrated in Fig. 5, "previous operation" is an operation that is most recently performed with respect to the electronic document, and is one of state items indicating the operation performed so far with respect to the electronic document. Note that the operation performed so far only indicates the state of the electronic document and is different from the operation performed with respect to the electronic document of the state (that is, the operation indicated by the operation information). The operation performed so far is not limited to the previous operation and may include a plurality of operations performed so far with respect to the electronic document.

In addition, among the state items illustrated in Fig. 5, "responsible person" to "operation time" are attributes of the electronic document. Particularly, the attributes of the electronic document stored in the operation history DB 38 are attributes related to the operation performed with respect to the electronic document. As described above, the attributes of the electronic document are also stored in the document DB 36 (refer to Fig. 4). Thus, each attribute item of the electronic document stored in the document DB 36 is also said to represent the state of the electronic document.

Each time processing corresponding to the operation of the user is executed with respect to the electronic document in the electronic document management service, the state information of the electronic document and the operation detail of the operation are stored in association with the document ID of the electronic document in the operation history DB 38. Accordingly, the state information indicating the state of the electronic document and the operation information indicating the operation performed with respect to the electronic document of the state are accumulated in the operation history DB 38.

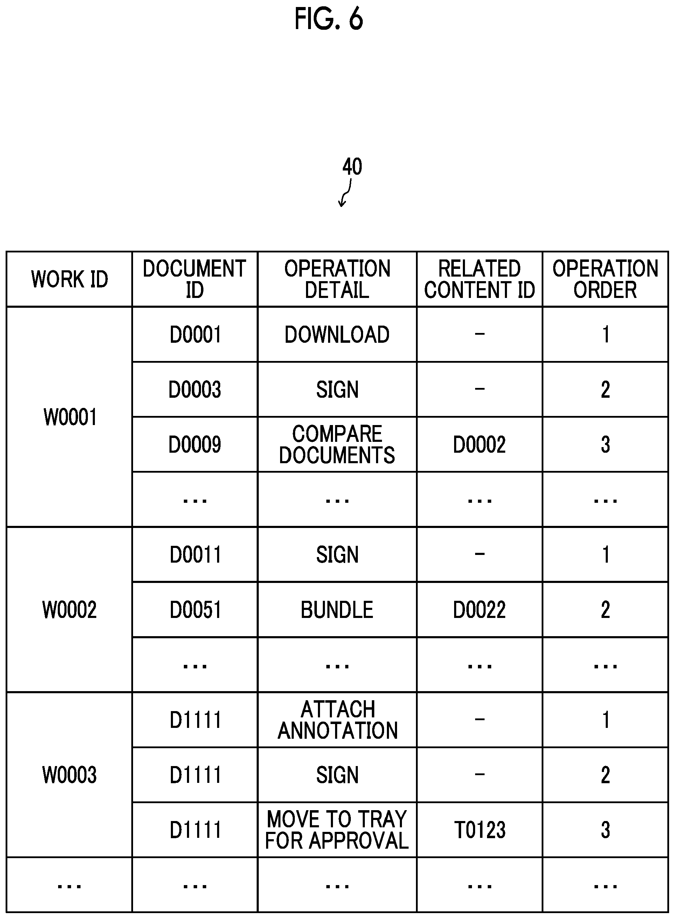

Fig. 6 is a conceptual diagram illustrating an example of a detail of the work DB 40. Work information that is information related to the work defined in the electronic document management service is stored in the work DB 40. The work includes a plurality of operations with respect to one or a plurality of pieces of electronic content (in the present exemplary embodiment, the electronic document). For example, a flow of a series of a plurality of operations such as performing an operation "sign" and performing an operation "check amount of money" with respect to an electronic document "estimate document" is the work.

In the present exemplary embodiment, a work ID for uniquely identifying the work, the document ID of the electronic document as a target of the work, details of a plurality of operations performed in the past with respect to the electronic document in the work, and a related content ID that is the document ID of related content which is the electronic content related to the electronic document with respect to the operations are stored in association with each other in the work DB 40. As described above, the attributes of the electronic document are associated with the document ID of the electronic document in the document DB 36 and in the operation history DB 38. Thus, the attributes of the electronic document as a target of the work, the details of the plurality of operations performed in the past with respect to the electronic document, and the attributes of the related electronic content related to the electronic document with respect to at least one operation of the plurality of operations are said to be associated with each other in the work DB 40.

For example, in a case where the detail of the operation included in the work is "compare documents", another electronic document to be compared with the electronic document as a target of the operation is the related content. Whether or not another electronic document is compared may be determined depending on, for example, whether or not another electronic document is opened in the middle of opening an electronic document. In addition, for example, in a case where the detail of the operation included in the work is "move to tray for approval", the tray for approval is the related content. A tray is a memory region that is defined in the electronic document management service and that stores the electronic document, and is a memory region for a specific purpose. For example, an electronic document to be approved by a superior is stored in the tray for approval. The superior can easily perceive whether or not there is an electronic document required to be approved by checking the tray for approval. That is, "move to tray for approval" is said to be an operation of changing the memory region in which the electronic document as a target is stored to a storage region "tray for approval". Accordingly, in a case where the electronic content managed by the electronic content management service is the electronic document, the related content is not limited to the electronic document.

In addition, for example, order information indicating an operation order of each of the plurality of operations included in the work may be further associated with the work ID in the work DB 40. The "operation order" in Fig. 6 is the order information.

A work may be defined in advance by the user. In addition, a work including a plurality of operations may be defined in accordance with the operation of the user in the electronic document management service. For example, a plurality of operations performed within a predetermined time in one workspace may be included in one work.

Each time processing corresponding to the operation of the user with respect to the work is executed in the electronic document management service, the document ID of the electronic document, the operation detail of the operation, the related content ID, and the order information are stored in association with the work ID of the work in the work DB 40.

With reference to Fig. 3 again, the processor 42 is configured with, for example, a central processing unit (CPU). The processor 42 has functions of a content processing unit 44, a training processing unit 46, a recommended operation specifying unit 48, a notification unit 50, and a related content specifying unit 52 based on the information processing program stored in the memory 32.

The content processing unit 44 executes various types of processing with respect to the electronic document managed by the electronic document management service. Particularly, the content processing unit 44 executes processing with respect to the electronic document in accordance with the operation of the user with respect to the electronic document. In the present exemplary embodiment, in a case where an access request to the electronic document management service is received from the user terminal 12 used by the user, the content processing unit 44 executes authentication processing to authenticate the user. The authentication processing may be processing that is already known. For example, the content processing unit 44 authenticates the user by causing the user to input a user ID and a password and by referring to a user ID and a password stored in a user DB (not illustrated). After the authentication, the electronic document management service is provided to the user, and the content processing unit 44 executes processing with respect to the electronic document in accordance with the operation of the user with respect to the electronic document in the electronic document management service.

Each time processing with respect to the electronic document is executed in accordance with the operation of the user, the content processing unit 44 stores the state information indicating the state of the electronic document before the operation and the operation information indicating the operation in association with each other in the operation history DB 38. As described above, the state information includes the attributes of the electronic document and the operation performed so far with respect to the electronic document. The content processing unit 44 can acquire the attributes of the electronic document from the meta-information of the electronic document or from the information related to the electronic document included in the electronic document management service. In a case where the attributes of the electronic document include information related to the user who has operated the electronic document, information related to the authenticated user can be acquired from the user DB in which information related to each user is stored. In addition, the content processing unit 44 can acquire the operation performed so far with respect to the electronic document from the operation history DB 38.

In addition, in a case where a determination that a plurality of operations included in one work are performed by the user is made (for example, in a case where operations with respect to a predetermined work are executed by the user, or in a case where a plurality of operations are performed within the predetermined time in one workspace), the content processing unit 44 stores the work ID of the work, the document ID of the electronic document as a target of the work, the operation details of the operations, the related content ID, and the order information in association with each other in the work DB 40.

The training processing unit 46 executes training processing for training the learning model 34. Specifically, the training processing unit 46 trains the learning model 34 via supervised learning using training data. Specifically, the training processing unit 46, using the training data including the state information indicating the state of the electronic document and the operation information indicating the operation performed in the past with respect to the electronic document of the state, trains the learning model 34 to predict and output the operation to be performed with respect to the electronic document based on the state of the electronic document.

As described above, the state information indicating the state of the electronic document and the operation information indicating the operation performed in the past with respect to the electronic document of the state are stored in the document DB 36 and in the operation history DB 38. Accordingly, the training processing unit 46 trains the learning model 34 using the state information and the operation information stored in the document DB 36 and in the operation history DB 38 as the training data.

Specifically, the training processing unit 46 inputs one state information as the training data stored in the document DB 36 and in the operation history DB 38 into the learning model 34. The learning model 34 predicts the operation to be performed with respect to the electronic document of the state indicated by the state information and outputs a prediction result as output data. The training processing unit 46 calculates a difference between the output data of the learning model 34 and the operation information (used as the training data) that is stored in the operation history DB 38 and that is associated with the input state information, and adjusts parameters in the learning model 34 to decrease the difference. The learning model 34 is trained by repeating the training processing.

In a case where the state information indicating the state of the electronic document is input, the learning model 34 that is sufficiently trained can output the operation to be performed with respect to the electronic document with high accuracy. The learning model 34 may predict a plurality of operations to be performed with respect to the electronic document indicated by the input state information and then output prediction accuracy for each operation. For example, in a case where the learning model 34 is a neural network, a softmax function can be provided as an activation function in an output layer of the neural network. In this case, the softmax function outputs the plurality of operations and the prediction accuracy of each operation.

The recommended operation specifying unit 48 specifies a recommended operation that is an operation to be performed with respect to a target electronic document as target content which is the electronic document operated by the user. For example, the electronic document selected by the user in the electronic document management service can be the target electronic document. Alternatively, the electronic document stored in the workspace dedicated to the user in the electronic document management service can be the target electronic document of the user.

Specifically, the recommended operation specifying unit 48 specifies the recommended operation with respect to the target electronic document based on the state information indicating the state of the electronic document, the operation information indicating the operation performed in the past with respect to the electronic document of the state, and the state of the target electronic document.

Specifically, a first method of specifying the recommended operation with respect to the target electronic document via the recommended operation specifying unit 48 is a method of using the trained learning model 34. In this method, the recommended operation specifying unit 48 acquires the state information indicating the state of the target electronic document (a method of the acquisition is described above) and inputs the state information of the target electronic document into the trained learning model 34. The recommended operation specifying unit 48 specifies the recommended operation based on the output data of the learning model 34. For example, as described above, in a case where the learning model 34 outputs the plurality of operations and the prediction accuracy of each operation, the recommended operation specifying unit 48 specifies one or a plurality of operations that are output by the learning model 34 and that have the prediction accuracy higher than or equal to a threshold value as the recommended operation. Alternatively, the recommended operation specifying unit 48 may specify an operation having the highest prediction accuracy among the operations output by the learning model 34 as the recommended operation.

A second method of specifying the recommended operation with respect to the target electronic document via the recommended operation specifying unit 48 is a method of using a statistical technique. In this method, for example, the recommended operation specifying unit 48 can extract a plurality of pieces of state information identical or similar to the state information of the target electronic document from the operation history DB 38 and specify the recommended operation based on statistics of a plurality of operations associated with the extracted plurality of pieces of state information. For example, the recommended operation specifying unit 48 can specify the most frequent operation among the plurality of operations associated with the extracted plurality of pieces of state information as the recommended operation.

The notification unit 50 notifies the user operating the target electronic document of the recommended operation specified by the recommended operation specifying unit 48. In the present exemplary embodiment, the notification unit 50 displays the recommended operation on a screen that is provided by the electronic document management service and that is displayed on the display 22 of the user terminal 12.

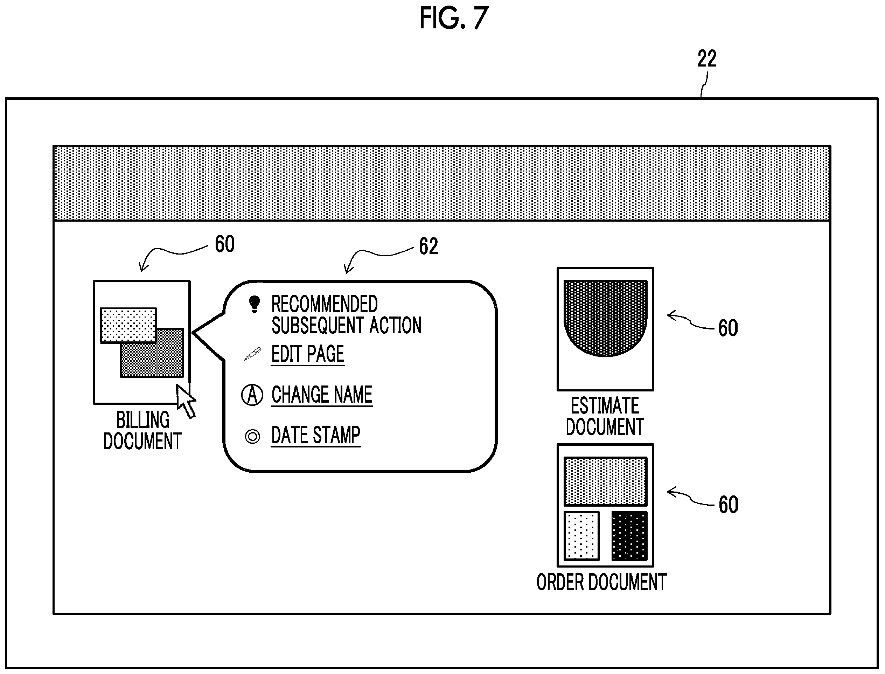

Fig. 7 is a diagram illustrating an example of the screen for providing the notification of the recommended operation. The screen illustrated in Fig. 7 is a screen provided by the electronic document management service and is a screen displayed in a case where the user operating the target electronic document accesses the workspace of the user. In the present specification, the screen will be referred to as a workspace screen. A thumbnail 60 of the electronic document stored in the workspace is displayed on the workspace screen. The notification unit 50 notifies the user of the recommended operation in the aspect of being associated with the thumbnail 60 of the target electronic document on the workspace screen. In the example in Fig. 7, the notification unit 50 displays a notification window 62 that shows three recommended operations of "edit page", "change name", and "date stamp".

For example, as the user selects the electronic document by placing a mouse cursor on the thumbnail 60, the recommended operation specifying unit 48 can specify the recommended operation with respect to the target electronic document using the selected electronic document as the target electronic document, and the notification unit 50 can display the notification window 62 showing the specified recommended operation on the workspace screen. Alternatively, in a case where the user displays the workspace screen, the recommended operation specifying unit 48 may specify the recommended operation with respect to each target electronic document using a plurality of electronic documents stored in the workspace as the target electronic document, and the notification unit 50 may display each notification window 62 showing the recommended operation specified for each target electronic document in the aspect of being associated with each target electronic document.

By notifying the user of the recommended operation with respect to the target electronic document via the notification unit 50, the user can easily perceive the operation to be executed with respect to the target electronic document. The notification of the recommended operation to the user by the notification unit 50 may be provided by voice or the like instead of or in addition to the display on the display 22.

In the present exemplary embodiment, the user can perform a click or the like to select an icon or a character string indicating each recommended operation shown on the notification window 62. In a case where the user selects the icon or the character string of an intended recommended operation, an execution instruction of the selected recommended operation is transmitted to the server 14 from the user terminal 12, and the content processing unit 44 executes processing corresponding to the selected recommended operation in accordance with the execution instruction.

Before the recommended operation specified by the recommended operation specifying unit 48 is executed, the related content specifying unit 52 specifies target-related content that is electronic content related to the recommended operation. Hereinafter, a method of specifying the target-related content will be sequentially described.

In a first step, the related content specifying unit 52 specifies a similar work similar to the work with respect to the target electronic document from works stored in the work DB 40 based on the work DB 40, the attributes of the target electronic document, and the operation detail performed by the user so far with respect to the target electronic document.

Specifically, first, the related content specifying unit 52 defines a target electronic document vector that is a multidimensional vector having the attributes of the target electronic document and data representing the operation detail (the operation detail is acquired from the operation history DB 38) performed by the user so far with respect to the target electronic document as elements. In addition, the related content specifying unit 52 defines a past work vector that is a multidimensional vector having the attributes (the attributes are acquired from at least one of the document DB 36 or the operation history DB 38) of the document ID included in the works stored in the work DB 40 and data representing the operation detail (the operation detail is acquired from the operation history DB 38) performed with respect to the electronic document indicated by the document ID as elements. The number of defined past work vectors corresponds to the number of works stored in the work DB 40.

Next, the related content specifying unit 52 calculates each similarity between the target electronic document vector and each past work vector. The similarity between the target electronic document vector and each past work vector can be calculated using, for example, a cosine similarity.

The related content specifying unit 52 specifies a work having the highest calculated cosine similarity as the similar work similar to the work with respect to the target electronic document. Alternatively, the related content specifying unit 52 may specify a plurality of works with respect to past work vectors having similarities higher than or equal to a predetermined similarity threshold value as a plurality of similar works.

As an example, for example, in a case where the operation details performed by the user so far with respect to the target electronic document of which a value of an attribute item "document type" is "billing document" are "download" and "sign", a work including the operation details "download" and "sign" as the operation with respect to the electronic document of which the value of the attribute item "document type" is "billing document" is specified as the similar work.

In a case where the order information is stored in the work DB 40, the related content specifying unit 52 may specify the similar work by taking into consideration the operation detail performed by the user so far with respect to the target electronic document and the operation order of each operation and also a plurality of operation details included in the extracted work ID and the operation order of each operation. Specifically, the related content specifying unit 52 adds data indicating the operation order of the operation performed by the user so far with respect to the target electronic document to the elements of the target electronic document vector, adds data indicating the order information stored in the work DB 40 to the elements of the past work vector, and specifies the similar work based on the similarity between the target electronic document vector and the past work vector.

As an example in this case, for example, in a case where the operation detail performed by the user so far with respect to the target electronic document of which the value of the attribute item "document type" is "billing document" is "download" and "sign" and where the operations are performed in an order of "download" → "sign", a work in which the operation order of the operation detail "download" is "1" and in which the operation order of the operation detail "sign" is "2" as the operation with respect to the electronic document of which the value of the attribute item "document type" is "billing document" is specified as the similar work.

In the present exemplary embodiment, the similar work is a concept including a work identical to the work with respect to the target electronic document. In addition, a method other than the above method may be used as a method of specifying the similar work.

In a second step, in a case where the recommended operation specified by the recommended operation specifying unit 48 is included in the specified similar work and where the related content ID is associated with the work ID of the similar work and with a detail of the recommended operation in the work DB 40, the related content specifying unit 52 specifies the attributes of the related content indicated by the related content ID. That is, in the present exemplary embodiment, an operation identical to the recommended operation specified by the recommended operation specifying unit 48 among operations included in the specified similar work is an "operation that is performed in the similar work and that corresponds to the recommended operation". Similarities may be defined between a plurality of operations based on the details of the operations, and operations having the similarity higher than or equal to a predetermined threshold value may be regarded as the identical operation. In a case where the related content is an electronic document, the related content specifying unit 52 can specify the attributes of the related content by referring to the document DB 36 or to the operation history DB 38. In addition, in a case where the related content is other than an electronic document (for example, a tray), attributes (for example, a name, a purpose, and a user who can view) of the tray managed by the electronic document management service can be specified.

For example, an assumption that the detail of the work DB 40 is the detail illustrated in Fig. 6, the recommended operation is specified as "compare documents", and a work indicated by a work ID "W0001" is specified as the similar work is made. In this case, the related content specifying unit 52 specifies, for example, a value "estimate document" (refer to Fig. 4) of the attribute item "document type" as attributes of related content indicated by a related content ID "D0002".

Attributes of the target-related content are specified through the second step. However, since a plurality of pieces of electronic content having the attributes may be registered in the electronic document management service, electronic content related to the target electronic document (that is, the target-related content) in the electronic content having the attributes is specified through a third step below.

As a third step, the related content specifying unit 52 specifies the target-related content from the electronic content having the attributes specified in the second step based on the target electronic document.

Various methods can be employed as a method of specifying the target-related content based on the target electronic document. For example, electronic content that has the attributes specified in the second step and that is stored in the identical workspace to the target electronic document may be the target-related content.

Alternatively, the related content specifying unit 52 may specify the target-related content based on detail information that is extracted by analyzing the target electronic document and that indicates a detail of the target electronic document and detail information that is extracted by analyzing the electronic content having the attributes specified in the second step and that indicates a detail of the electronic content. For example, the related content specifying unit 52 acquires the detail information of the target electronic document by analyzing a file name of the target electronic document or a detail of a text extracted from the target electronic document using natural language processing and also acquires the detail information of the electronic content having the attributes specified in the second step by analyzing a title of the electronic content or the detail of the electronic content using natural language processing. Electronic content for which both of the acquired detail information are similar may be the target-related content. For example, electronic content of which a customer name, a contract number, or the like matches a customer name, a contract number, or the like of the target electronic document can be the target-related content.

The notification unit 50 notifies the user of the target-related content specified by the related content specifying unit 52. In the present exemplary embodiment, the notification unit 50 displays the target-related content on the workspace screen.

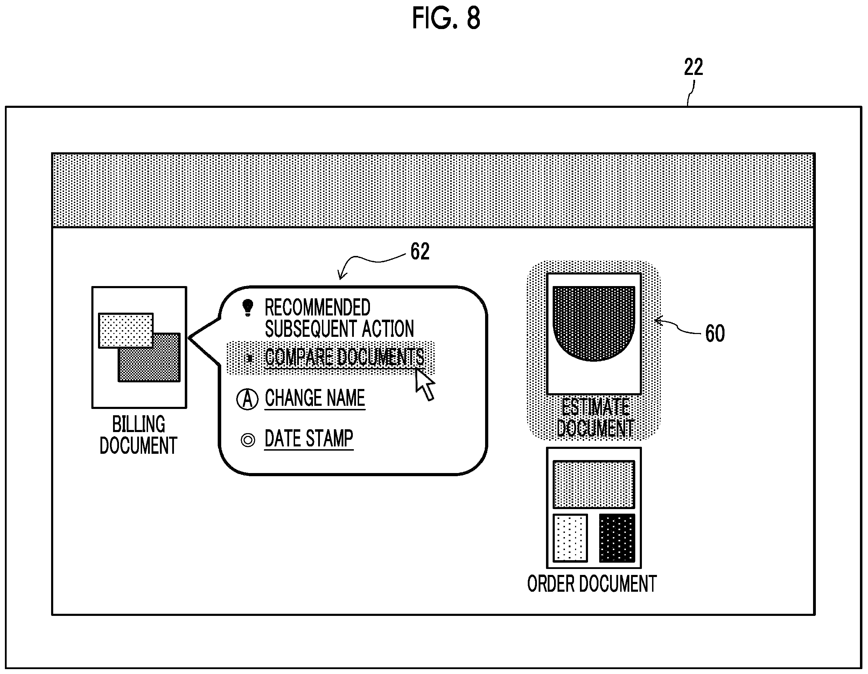

Fig. 8 is a diagram illustrating a first example of the screen for providing the notification of the target-related content. Fig. 8 illustrates an example in which the target-related content is the electronic document stored in the workspace corresponding to the workspace screen illustrated in Fig. 8. For example, in a case where the user places the mouse cursor on the recommended operation "compare documents" shown on the notification window 62 and selects the recommended operation "compare documents", the notification unit 50 displays the thumbnail 60 of the target-related content (in the example in Fig. 8, "estimate document") of the selected recommended operation "compare documents" in a highlighted manner. Accordingly, the user can perceive that the electronic document with respect to the thumbnail 60 displayed in a highlighted manner is the target-related content of the selected recommended operation "compare documents".

Other methods may be used as a method of displaying the target-related content with respect to the target electronic document. For example, the thumbnail 60 of the target-related content "estimate document" may be displayed in a reduced manner near the recommended operation "compare documents" in the notification window 62.

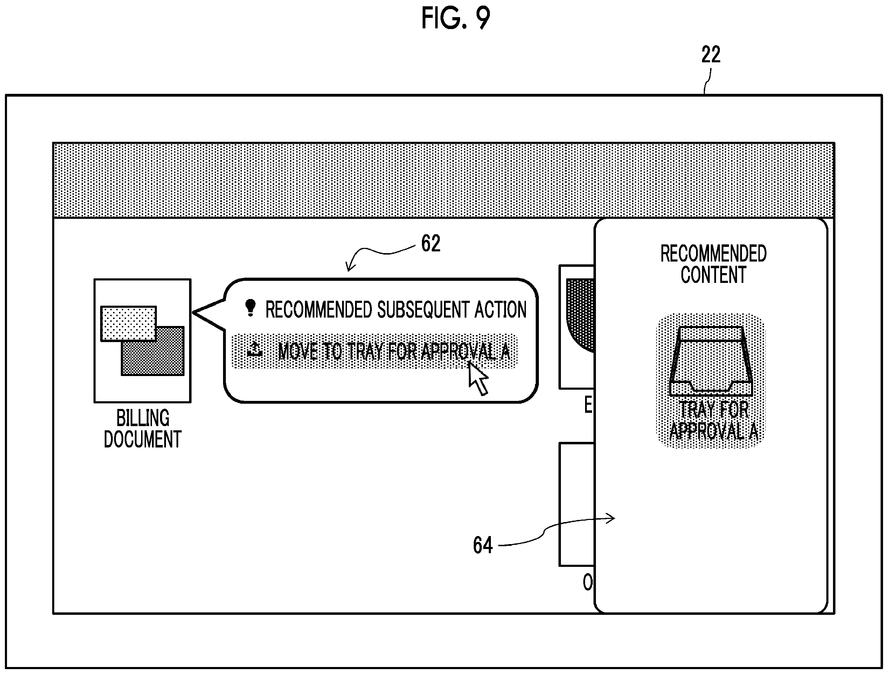

Fig. 9 is a diagram illustrating a second example of the screen for providing the notification of the target-related content. Fig. 9 illustrates an example in which the target-related content is a tray for approval A. For example, in a case where the user places the mouse cursor on a recommended operation "move to tray for approval A" shown on the notification window 62 and selects the recommended operation "move to tray for approval A", the notification unit 50 displays a notification window 64 showing the target-related content (in the example in Fig. 9, "tray for approval A") of the selected recommended operation "move to tray for approval A". Accordingly, the user can perceive that the tray for approval A is the target-related content of the selected recommended operation "move to tray for approval A".

In a case where a plurality of recommended operations are specified by the recommended operation specifying unit 48, the related content specifying unit 52, for example, may specify a plurality of pieces of target-related content related to the plurality of recommended operations, respectively. In this case, for example, the notification unit 50 may display the specified plurality of pieces of target-related content on the display 22 in the aspect of showing the related recommended operations.

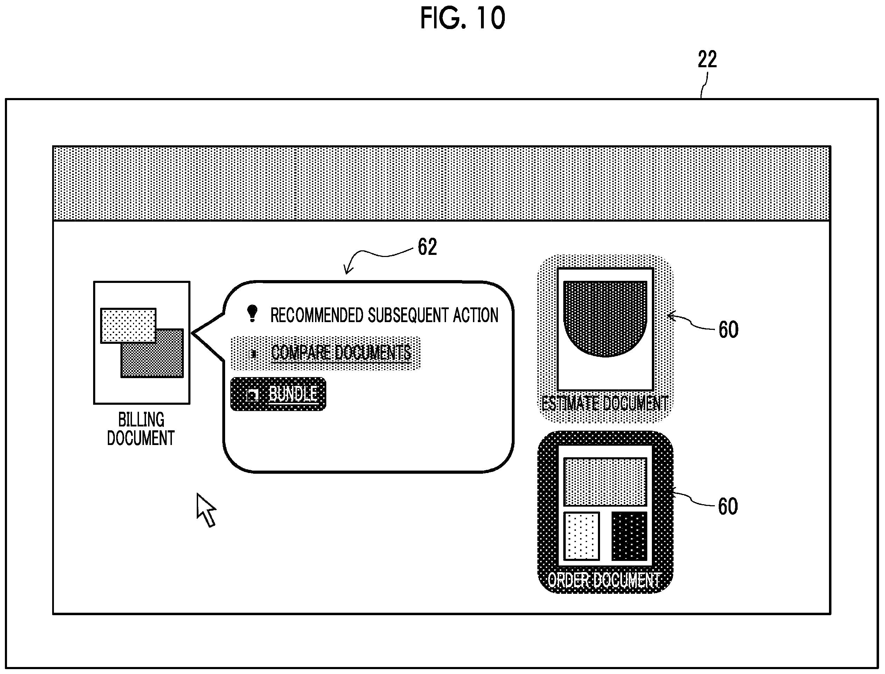

Fig. 10 is a diagram illustrating an example of a screen for providing a notification of the plurality of pieces of target-related content. The example in Fig. 10 is an example in a case where the target-related content "estimate document" with respect to the recommended operation "compare documents" is specified and where target-related content "order document" with respect to a recommended operation "bundle" is specified. In this case, the notification unit 50 displays the plurality of pieces of target-related content on the workspace screen such that a relationship between the recommended operation "compare documents" and the target-related content "estimate document" is shown and that a relationship between the recommended operation "bundle" and the target-related content "order document" is shown. For example, the notification unit 50 colors a character string or an icon indicating the recommended operation "compare documents" and the thumbnail 60 of the target-related content "estimate document" with a first color and colors a character string or an icon indicating the recommended operation "bundle" and the thumbnail 60 of the target-related content "order document" with a second color different from the first color.

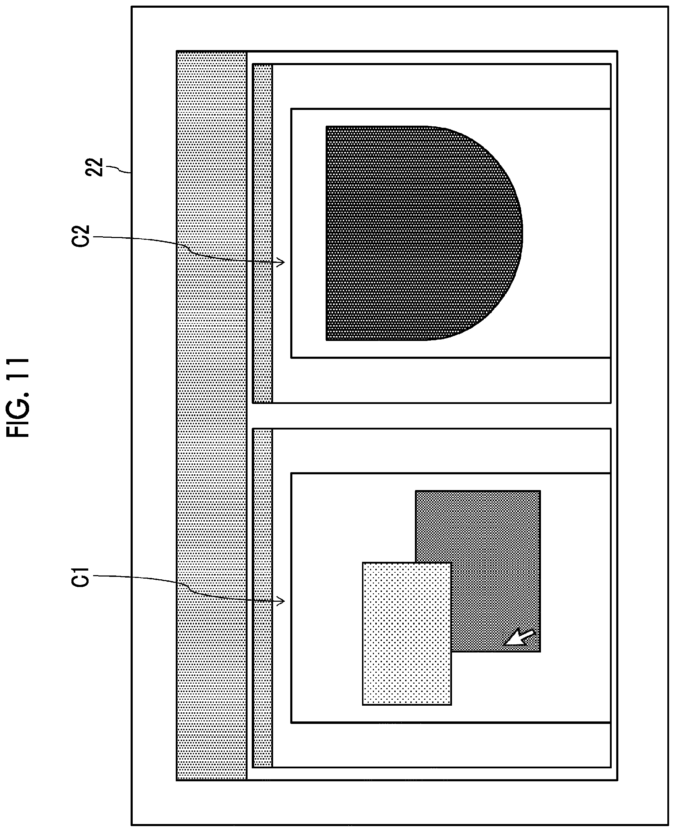

As described above, the user can perform a click or the like to select the icon or the character string indicating each recommended operation shown on the notification window 62. Here, for example, the content processing unit 44 may open the target electronic document with respect to the recommended operation and the target-related content with respect to the recommended operation in accordance with the operation of selecting the recommended operation by the user. Opening the content means displaying the content on a screen (in the present exemplary embodiment, the display 22 of the user terminal 12) in a state where the detail of the content is viewable or editable using an application for viewing or editing the content. In the present exemplary embodiment, the electronic document is viewable and editable in an application provided by the electronic document management service. Thus, for example, in a case where the user operates the character string or the icon indicating the recommended operation "compare documents" on the screen in Fig. 10, the content processing unit 44 opens an electronic document "billing document" C1 and an electronic document "estimate document" C2 in the application as illustrated in Fig. 11. Accordingly, an effort of the user for opening the target electronic document and the target-related content is reduced. Alternatively, the notification unit 50 displays a button "open related document together" (not illustrated) near the recommended operation "compare documents". In a case where the button is operated, the content processing unit 44 opens the electronic document "billing document" C1 and the electronic document "estimate document" C2. Since the button "open related document together" corresponds to the recommended operation, selecting the button "open related document together" is said to be an operation of selecting the recommended operation corresponding to the button by the user.

Access permission that indicates a user accessible to the electronic document managed by the electronic document management service or to the tray defined in the electronic document management service may be set for the electronic document or for the tray. The access permission is permission for access. For example, in the case of access permission for a document, examples of the access permission include permission to view the document (editing and the like are not possible) and permission to view and edit the document. In addition, in the case of access permission for a tray for approval, examples of the access permission include permission to transmit a document (viewing and the like of other documents stored in the tray for approval are not possible) and permission to transmit a document and view other documents stored in the tray for approval. Accordingly, a plurality of levels may be provided as the access permission. Hereinafter, these levels of permission will be collectively described as the access permission without distinction. The access permission for each electronic document may be stored in the document DB 36, and the access permission for each tray may be stored as setting information of the electronic document management service. In this case, a case where the target-related content for which the user operating the target electronic document does not have the access permission is specified is considered.

In a case where the user operating the target electronic document does not have the access permission for the specified target-related content, the notification unit 50, for example, may notify the user that the target-related content is specified and that the user does not have the access permission for the target-related content.

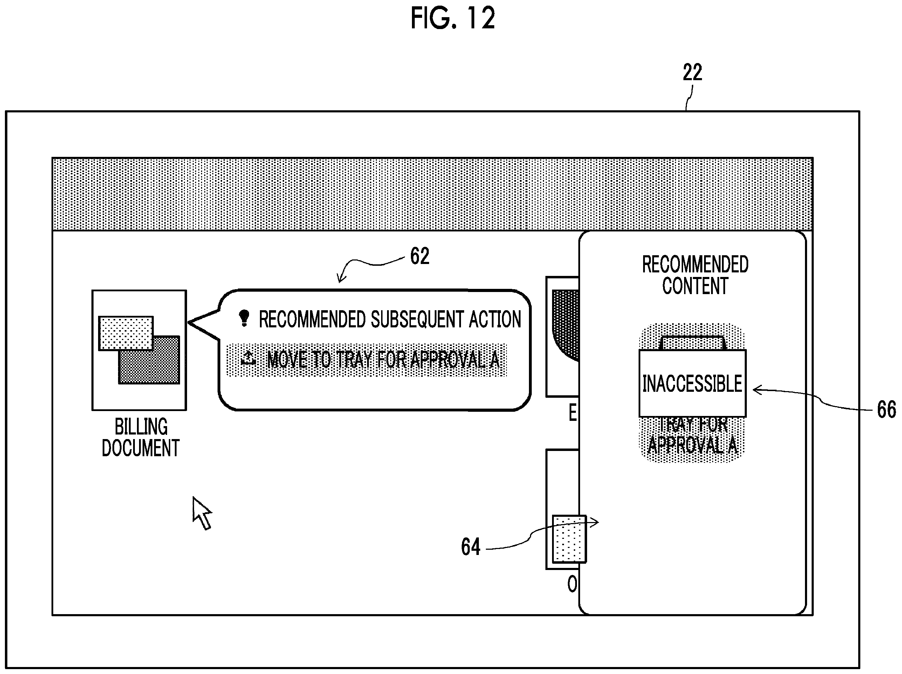

For example, as in the example illustrated in Fig. 9, in a case where the target-related content "tray for approval A" of the recommended operation "move to tray for approval A" is specified, an assumption that the user operating the target electronic document "billing document" does not have the access permission for the target-related content "tray for approval A" is made. In this case, as illustrated in Fig. 12, the notification unit 50 notifies the user that the target-related content "tray for approval A" is specified by displaying the notification window 64 showing the target-related content "tray for approval A" on the workspace screen, and notifies the user that the user does not have the access permission for the target-related content "tray for approval A" by displaying an icon 66 showing "inaccessible" in association with the target-related content "tray for approval A". Accordingly, the user can perceive that the target-related content for which the user does not have the access permission is specified.

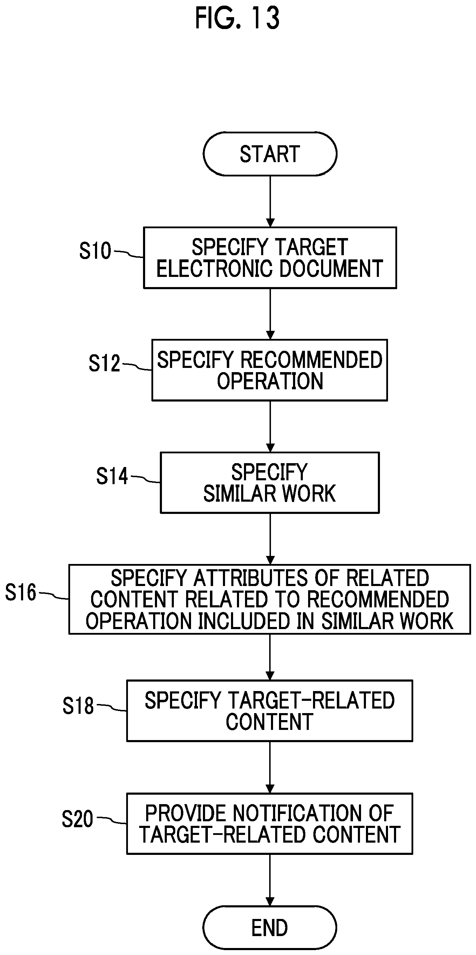

The above is a summary of the server 14 according to the present exemplary embodiment. Hereinafter, a flow of processing of the server 14 will be described in accordance with the flowchart illustrated in Fig. 13.

In step S 10, the recommended operation specifying unit 48 specifies the target electronic document.

In step S12, the recommended operation specifying unit 48 specifies the recommended operation with respect to the target electronic document by, for example, inputting the state information indicating the state of the target electronic document specified in step S10 into the trained learning model 34.

In step S14, the related content specifying unit 52 specifies the similar work similar to the work with respect to the target electronic document from the works stored in the work DB 40 based on the work DB 40, the attributes of the target electronic document, and the operation detail performed by the user so far with respect to the target electronic document.

In step S16, in a case where the recommended operation specified in step S12 is included in the similar work specified in step S14 and where the related content ID is associated with the work ID of the similar work and with the detail of the recommended operation in the work DB 40, the related content specifying unit 52 specifies the attributes of the related content indicated by the related content ID.

In step S18, the related content specifying unit 52 specifies the target-related content from the electronic content having the attributes specified in step S16 based on the target electronic document.

In step S20, the notification unit 50 notifies the user of the target-related content specified in step S 18.

While the exemplary embodiment according to the present invention has been described above, the present invention is not limited to the exemplary embodiment and can be subjected to various changes without departing from the gist of the present invention.

For example, while the processor 42 (specifically, the training processing unit 46) of the server 14 trains the learning model 34 in the present exemplary embodiment, the training processing of the learning model 34 may be performed by an apparatus other than the server 14, and the trained learning model 34 may be stored in the memory 32. In this case, the processor 42 may not have the function of the training processing unit 46. The document DB 36 and the operation history DB 38 are not required to be stored in the memory 32 of the server 14 and may be stored in a memory accessible from the apparatus that executes the training processing.

In addition, while the learning model 34 is stored in the memory 32 of the server 14 in the present exemplary embodiment, the learning model 34 is not necessarily required to be stored in the memory 32 and may be stored in a memory of another apparatus accessible from the server 14. Similarly, while the work DB 40 is stored in the memory 32 of the server 14 in the present exemplary embodiment, the work DB 40 is also not necessarily required to be stored in the memory 32 and may be stored in a memory of another apparatus accessible from the server 14.

In addition, while the processor 42 of the server 14 has the functions of the recommended operation specifying unit 48, the notification unit 50, and the related content specifying unit 52 in the present exemplary embodiment, processors of different apparatuses may have these functions. For example, a first processor of a first information processing apparatus may have the function of the recommended operation specifying unit 48, a second processor of a second information processing apparatus may have the function of the notification unit 50, and a third processor of a third information processing apparatus may have the function of the related content specifying unit 52. In this case, an information processing system configured with a plurality of information processing apparatuses has the functions according to the exemplary embodiment of the present invention.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device). In the embodiments above, the term "processor" is broad enough to encompass one processor or plural processors in collaboration which are located physically apart from each other but may work cooperatively. The order of operations of the processor is not limited to one described in the embodiments above, and may be changed.

### Supplementary Note

(((1))) An information processing apparatus comprising:
   a processor configured to:
   based on state information indicating a state of electronic content, operation information indicating an operation performed in the past with respect to the electronic content of the state, and a state of target content that is electronic content operated by a user, specify a recommended operation that is an operation to be subsequently performed by the user with respect to the target content;
   based on a work database in which information related to a work including a plurality of operations performed in the past with respect to electronic content is stored and in which an attribute of the electronic content, details of the plurality of operations performed in the past with respect to the electronic content, and an attribute of related content that is electronic content related to the electronic content with respect to at least one operation of the plurality of operations are associated with each other, an attribute of the target content, and an operation detail performed by the user so far with respect to the target content, specify a similar work similar to a work with respect to the target content from the work stored in the work database;
   specify an attribute of the related content that is an attribute of the related content included in the similar work with respect to an operation corresponding to the recommended operation performed in the similar work;
   specify target-related content that is electronic content related to the recommended operation with respect to the target content, from electronic content having the specified attribute based on the target content; and
   notify the user of the target-related content.
(((2))) The information processing apparatus according to (((1))), wherein the processor is configured to:
   specify, as the target-related content, electronic content that is electronic content having the specified attribute and that is stored in the identical work region to the target content.
(((3))) The information processing apparatus according to (((2))), wherein the processor is configured to:
   specify the target-related content based on detail information that is extracted by analyzing the target content and that indicates a detail of the target content and detail information that is extracted by analyzing the electronic content having the specified attribute and that indicates a detail of the electronic content.
(((4))) The information processing apparatus according to any one of (((1))) to (((3))), wherein the processor is configured to:
   specify a plurality of recommended operations;
   specify a plurality of pieces of target-related content related to the plurality of recommended operations, respectively; and
   display the plurality of pieces of target-related content on a display unit in an aspect of showing the related recommended operations.
(((5))) The information processing apparatus according to any one of (((1))) to (((4))), wherein the processor is configured to:
   open the target content and the target-related content in accordance with an operation of selecting the recommended operation by the user.
(((6))) The information processing apparatus according to any one of (((1))) to (((5))), wherein the processor is configured to:
   in a case where the user does not have access permission for the target-related content, notify the user that the target-related content is specified and that the user does not have the access permission for the target-related content.
(((7))) An information processing program causing a computer to:
   based on state information indicating a state of electronic content, operation information indicating an operation performed in the past with respect to the electronic content of the state, and a state of target content that is electronic content operated by a user, specify a recommended operation that is an operation to be subsequently performed by the user with respect to the target content;
   based on a work database in which information related to a work including a plurality of operations performed in the past with respect to electronic content is stored and in which an attribute of the electronic content, details of the plurality of operations performed in the past with respect to the electronic content, and an attribute of related content that is electronic content related to the electronic content with respect to at least one operation of the plurality of operations are associated with each other, an attribute of the target content, and an operation detail performed by the user so far with respect to the target content, specify a similar work similar to a work with respect to the target content from the work stored in the work database;
   specify an attribute of the related content that is an attribute of the related content included in the similar work with respect to an operation corresponding to the recommended operation performed in the similar work; and
   specify target-related content that is electronic content related to the recommended operation with respect to the target content, from electronic content having the specified attribute based on the target content.

According to the aspect of (((1))) or (((7))), the user can easily perceive the target-related content related to the recommended operation that is an operation detail to be subsequently performed by the user with respect to the target content operated by the user.

According to the aspect of (((2))), the electronic content in the identical work region to the target content can be the target-related content.

According to the aspect of (((3))), the related content corresponding to the detail of the target content can be specified.

According to the aspect of (((4))), the user can perceive the target-related content related to each of the plurality of recommended operations.

According to the aspect of (((5))), the user can open the target content and the target-related content by performing the operation of selecting the recommended operation.

According to the aspect of (((6))), the user can perceive that the target-related content for which the user does not have the access permission is specified.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

10: information processing system
12: user terminal
14: server
16: communication line
20, 30: communication interface
22: display
24: input interface
26, 32: memory
28, 42: processor
34: learning model
36: document DB
38: operation history DB
40: work DB
44: content processing unit
46: training processing unit
48: recommended operation specifying unit
50: notification unit
52: related content specifying unit

## Claims

1. An information processing apparatus comprising:
a processor configured to:
based on state information indicating a state of electronic content, operation information indicating an operation performed in the past with respect to the electronic content of the state, and a state of target content that is electronic content operated by a user, specify a recommended operation that is an operation to be subsequently performed by the user with respect to the target content;
based on a work database in which information related to a work including a plurality of operations performed in the past with respect to electronic content is stored and in which an attribute of the electronic content, details of the plurality of operations performed in the past with respect to the electronic content, and an attribute of related content that is electronic content related to the electronic content with respect to at least one operation of the plurality of operations are associated with each other, an attribute of the target content, and an operation detail performed by the user so far with respect to the target content, specify a similar work similar to a work with respect to the target content from the work stored in the work database;
specify an attribute of the related content that is an attribute of the related content included in the similar work with respect to an operation corresponding to the recommended operation performed in the similar work;
specify target-related content that is electronic content related to the recommended operation with respect to the target content, from electronic content having the specified attribute based on the target content; and
notify the user of the target-related content.

2. The information processing apparatus according to claim 1, wherein the processor is configured to:
specify, as the target-related content, electronic content that is electronic content having the specified attribute and that is stored in the identical work region to the target content.

3. The information processing apparatus according to claim 2, wherein the processor is configured to:
specify the target-related content based on detail information that is extracted by analyzing the target content and that indicates a detail of the target content and detail information that is extracted by analyzing the electronic content having the specified attribute and that indicates a detail of the electronic content.

4. The information processing apparatus according to any one of claims 1 to 3, wherein the processor is configured to:
specify a plurality of recommended operations;
specify a plurality of pieces of target-related content related to the plurality of recommended operations, respectively; and
display the plurality of pieces of target-related content on a display unit in an aspect of showing the related recommended operations.

5. The information processing apparatus according to any one of claims 1 to 4, wherein the processor is configured to:
open the target content and the target-related content in accordance with an operation of selecting the recommended operation by the user.

6. The information processing apparatus according to any one of claims 1 to 5, wherein the processor is configured to:
in a case where the user does not have access permission for the target-related content, notify the user that the target-related content is specified and that the user does not have the access permission for the target-related content.

7. An information processing program causing a computer to:
based on state information indicating a state of electronic content, operation information indicating an operation performed in the past with respect to the electronic content of the state, and a state of target content that is electronic content operated by a user, specify a recommended operation that is an operation to be subsequently performed by the user with respect to the target content;
based on a work database in which information related to a work including a plurality of operations performed in the past with respect to electronic content is stored and in which an attribute of the electronic content, details of the plurality of operations performed in the past with respect to the electronic content, and an attribute of related content that is electronic content related to the electronic content with respect to at least one operation of the plurality of operations are associated with each other, an attribute of the target content, and an operation detail performed by the user so far with respect to the target content, specify a similar work similar to a work with respect to the target content from the work stored in the work database;
specify an attribute of the related content that is an attribute of the related content included in the similar work with respect to an operation corresponding to the recommended operation performed in the similar work; and
specify target-related content that is electronic content related to the recommended operation with respect to the target content, from electronic content having the specified attribute based on the target content.

8. An information processing method comprising:
specifying, based on state information indicating a state of electronic content, operation information indicating an operation performed in the past with respect to the electronic content of the state, and a state of target content that is electronic content operated by a user, a recommended operation that is an operation to be subsequently performed by the user with respect to the target content;
specifying, based on a work database in which information related to a work including a plurality of operations performed in the past with respect to electronic content is stored and in which an attribute of the electronic content, details of the plurality of operations performed in the past with respect to the electronic content, and an attribute of related content that is electronic content related to the electronic content with respect to at least one operation of the plurality of operations are associated with each other, an attribute of the target content, and an operation detail performed by the user so far with respect to the target content, a similar work similar to a work with respect to the target content from the work stored in the work database;
specifying an attribute of the related content that is an attribute of the related content included in the similar work with respect to an operation corresponding to the recommended operation performed in the similar work; and
specifying target-related content that is electronic content related to the recommended operation with respect to the target content, from electronic content having the specified attribute based on the target content.
